(19) Europäisches Patentamt
European Patent Office
Office européen des brevets

(11) **EP 4 661 513 A1**

## (12) EUROPEAN PATENT APPLICATION

(43) Date of publication:
**10.12.2025 Bulletin 2025/50**

(21) Application number: **25179123.2**

(22) Date of filing: **27.05.2025**

(51) International Patent Classification (IPC):
**H04W 52/02** (2009.01)   **H04W 76/27** (2018.01)

(52) Cooperative Patent Classification (CPC):
**H04W 52/0212; H04W 76/27; H04W 52/0216**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.06.2024 US 202418731926**

(71) Applicant: **T-Mobile Innovations LLC**
**Overland Park, KS 66251-2100 (US)**

(72) Inventor: **AN, Won Hyun**
**Overland Park, 66251 (US)**

(74) Representative: **Suddaby, Mark Edward**
**Novagraaf UK**
**1st Floor**
**77 Gracechurch Street**
**London EC3V 0AS (GB)**

(54) **MESSAGE DELIVERY TO WIRELESS USER DEVICES USING LEARNED RETRANSMISSION TIME IN WIRELESS COMMUNICATION NETWORKS**

(57) Various embodiments include a wireless communication network that comprises a control plane. The control plane receives a power saving mode entry message from a wireless user device. The control plane indicates a current power saving mode timer to the wireless user device. The control plane determines an adjustment time based on an amount of time elapsed between an initial power saving mode timer and a power saving mode exit message associated with the wireless user device. The control plane receives a message forwarding request for the wireless user device from a messaging server before the current power saving mode timer has expired. The control plane determines a retransmission time based on an amount of time remaining on the current power saving mode timer and the adjustment time. The control plane directs the messaging server to retransmit the message forwarding request at the retransmission time.

100

FIGURE 1

## Description

## TECHNICAL FIELD

Various embodiments of the present technology relate to messaging, and more specifically, to message delivery to user devices during power saving mode.

## BACKGROUND

Wireless communication networks provide wireless data services to wireless user devices. Exemplary wireless data services include voice calling, video calling, internet-access, media-streaming, online gaming, social-networking, and machine-control. Exemplary wireless user devices comprise phones, computers, vehicles, robots, and sensors. Radio Access Networks (RANs) exchange wireless signals with the wireless user devices over radio frequency bands. The wireless signals use wireless network protocols like Fifth Generation New Radio (5GNR), Long Term Evolution (LTE), Institute of Electrical and Electronic Engineers (IEEE) 802.11 (WIFI), and Low-Power Wide Area Network (LP-WAN). The RANs exchange network signaling and user data with network elements that are often clustered together into wireless network cores over backhaul data links. The core networks execute network functions to provide wireless data services to the wireless user devices.

To conserve battery life, user devices enter power saving mode. In power saving mode, the devices deactivate their wireless transceivers. User devices typically enter power saving mode when user activity has stopped or in response to user input. User devices are not reachable by the network (e.g., for message reception) when in power saving mode. To enter power saving mode, a user device notifies the network. The network then provides a power saving mode schedule to the user device. The schedule includes a period of time when the user device will be in power saving mode followed by a shorter paging window when the device will be reachable by the network. Upon reception of the schedule, the device enters power saving mode. When the scheduled paging window occurs, the device exits power saving mode and transfers an update message to the network that indicates the device is reachable for the duration of the paging window. When the paging window ends, the device reenters power saving mode. If the network receives a message for the user device from a messaging server while the user device is in power saving mode, the network core directs the messaging server to retransmit the message during the device's paging window. However, if the messaging server retransmits the message before the user device notifies the network that it is reachable, message delivery fails. These types of message failures degrade the user experience.

Unfortunately, in some instances, wireless communication networks may not effectively or efficiently select message retransmission times when user devices are in power saving mode.

## OVERVIEW

This Overview is provided to introduce a selection of concepts in a simplified form that are further described below in the Technical Description. This summary is not intended to identify key features or essential features of the claimed subject matter, nor is it intended to be used as an aid in determining the scope of the claimed subject matter.

Various embodiments of the present technology relate to solutions for text messaging. Some embodiments comprise a method. The method comprises receiving, by a network control plane in a wireless communication network, a power saving mode entry message from a wireless user device. The method further comprises indicating a current power saving mode timer to the wireless user device. The method further comprises determining an adjustment time based on an amount of time elapsed between an initial power saving mode timer and a power saving mode exit message associated with the wireless user device. The method further comprises receiving a message forwarding request for the wireless user device from a messaging server before the current power saving mode update timer expired. The method further comprises determining a retransmission time based on an amount of time remaining on the current power saving mode timer and the adjustment time. The method further comprises directing the messaging server to retransmit the message forwarding request at the retransmission time.

Some embodiments comprise a wireless communication network. The wireless communication network comprises control plane circuitry. The control plane circuitry receives a power saving mode entry message from a wireless user device. The control plane circuitry indicates a current power saving mode timer to the wireless user device. The control plane circuitry determines an adjustment time based on an amount of time elapsed between an initial power saving mode timer and a power saving mode exit message associated with the wireless user device. The control plane circuitry receives a message forwarding request for the wireless user device from a messaging server before the current power saving mode timer has expired. The control plane circuitry determines a retransmission time based on an amount of time remaining on the current power saving mode timer and the adjustment time. The control plane circuitry directs the messaging server to retransmit the message forwarding request at the retransmission time.

Some embodiments comprise one of more non-transitory computer readable storage media having program instructions stored thereon. When executed by a computing system, the program instructions direct the computing system to perform operations. The operations comprise measuring an amount of time elapsed between an expiration of a Tracking Area Update (TAU) timer and reception of a TAU message transmitted by a wireless user device to determine an adjustment time. The TAU timer indicates when the wireless user device is in power saving mode. The operations further comprise receiving, during a Paging Time Window (PTW) for the wireless user device, a Mobile Terminated Short Message Forwarding Request (TFR) retransmitted by a Short-Message-Service Center (SMSC). The operations further comprise transferring a Short-Message-Service (SMS) message included in the TFR for delivery to the wireless user device. The operations further comprise receiving, after expiration of the PTW, an idle mode indication from the wireless user device. The operations further comprise indicating a second TAU timer and a second PTW to the wireless user device. The operations further comprise receiving a second TFR for the wireless user device from the messaging server before the second TAU timer has expired. The operations further comprise selecting a Requested Retransmission Time (RRT) by summing an amount of time remaining on the second TAU timer and the adjustment time. The operations further comprise transferring a Mobile Terminated Short Message Forwarding Answer (TFA) to the SMSC that directs the SMSC to retransmit the second TFR at the RRT. The operations further comprise receiving, during the second PTW, the second TFR retransmitted by the SMSC at the RRT. The operations further comprise transferring a second SMS message included in the second TFR for delivery to the wireless user device.

## DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.

Figure 1 illustrates a communication network.
Figure 2 illustrates an exemplary operation of the communication network.
Figure 3 illustrates an exemplary operation of the communication network.
Figure 4 illustrates an exemplary operation of the communication network.
Figure 5 illustrates a Fifth Generation (5G)/Long Term Evolution (LTE) communication network.
Figure 6 illustrates a User Equipment (UE) in the 5G/LTE communication network.
Figure 7 illustrates a 5G gNodeB in the 5G/LTE communication network.
Figure 8 illustrates an LTE eNodeB in the 5G/LTE communication network.

Figure 9 illustrates a Network Function Virtualization Infrastructure (NFVI) in the 5G/LTE communication network.
Figure 10 further illustrates the NFVI in the 5G/LTE communication network.
Figure 11 illustrates an exemplary operation of the 5G/LTE communication network.

The drawings have not necessarily been drawn to scale. Similarly, some components or operations may not be separated into different blocks or combined into a single block for the purposes of discussion of some of the embodiments of the present technology. Moreover, while the technology is amendable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

## TECHNICAL DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

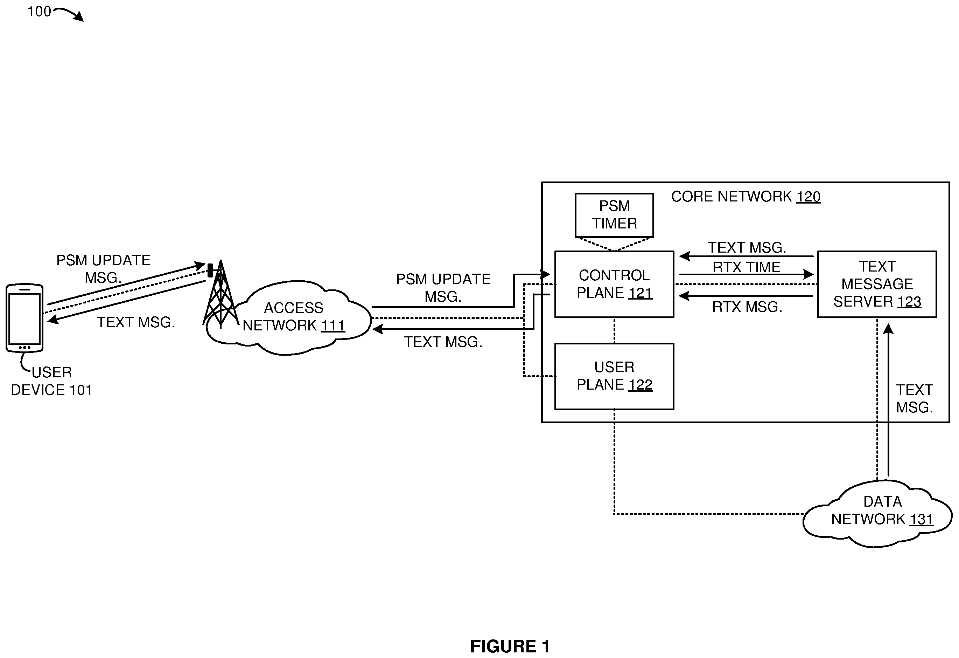

Figure 1 illustrates communication network 100 to adjust retransmission times for message delivery to user devices when in power saving mode. Communication network 100 provides services like media-streaming, internet-access, voice/video calling, text messaging, machine communications, or some other wireless communications product. Communication network 100 comprises user device 101, access network 111, core network 120, and data network 131. Core network 120 comprises control plane 121, user plane 122, and text message server 123. In other examples, communication network 100 may comprise additional or different elements than those illustrated in Figure 1.

Various examples of network operation and configuration are described herein. In some examples, user device 101 attaches to core network 120 over access network 111. Device 101 registers with control plane 121 for service on network 100. Control plane 121 authenticates and authorizes device 101 for wireless service and responsively directs device 101 to begin its session on core network 120 and directs user plane 122 to serve UE 101. User device 101 exchanges user data with user plane 122 over access network 111. User plane 122 exchanges the user date with data network 131.

Subsequently, user device 101 ends its sessions on network core 120. Due to lack of user activity (or in response to a user input), device 101 enters power saving mode. Power saving mode is a device operating state that reduces battery power consumption to a minimum (or near minimum) but maintains the device's connection to the network. While power saving mode extends the battery life of device 101, device 101 does not monitor paging and is therefore unreachable by core network 120 except during designated paging windows. To signify that it is entering power saving mode, device 101 transfers a power saving mode indication to control plane 121 over access network 111. Control plane 121 selects a power saving mode timer (referred to as a T3412 timer) and Paging Time Window (PTW) for device 101. The power saving mode timer designates a period of time when device 101 will be unreachable while the PTW indicates when the device will be reachable by network core 120. The power saving mode timer is typically longer and precedes PTW. For example, the power saving mode may last 100 seconds and be immediately followed by the PTW which lasts 15 seconds. Control plane 121 starts its copy of the power saving mode timer. Control plane 121 transfers an indication to device 101 over access network 111. The indication includes the power saving mode timer, the PTW, and directs device 101 to transfer an update message to control plane 121 during the PTW when the time expires. User device 101 sets its copy of the power saving mode timer.

While user device 101 is in power saving mode (e.g., when the power saving mode timer is active), data network 131 transfers a text message to text message server 123. For example, another device associated with network 131 may transfer a Short Message Service (SMS) message intended for device 101 and network 131 may forward the SMS message to server 123. Server 123 identifies that control plane 121 is associated with device 101 and responsively transfers the text message to control plane 121. Control plane 121 determines the power saving mode timer for device 101 is still active. In response, control plane 121 calculates an initial retransmit time for server 123 to retransmit the message based on the remaining time on the power saving mode timer and the PTW. The calculated retransmit time falls within the PTW of device 101. Control plane 121 directs text message server 123 to retransmit the text message at the calculated retransmit time. Message server 123 sets a retransmission timer based on the calculated retransmit time. For example, control plane 121 may utilize the following algorithm to select the initial retransmit time:

$$RTX\ time = PSM_c + \frac{PTW}{2} \qquad (1)$$

where *RTX time* is the initial retransmit time, $PSM_c$ is the power saving mode timer value at reception of the text message, and *PTW* is the PTW time for device 101. For example, when implementing equation (1), if control plane 121 receives the text message with 100 seconds remaining on the timer and the PTW was set to be 10 seconds, control plane 121 determines a retransmit time of 105 seconds. Control plane 121 may then direct messaging server to retransmit the text message 105 seconds in the future.

Subsequently, control plane 121 and user device 101 detect the expiration of the power saving mode timer. In response, user device 101 enters the PTW specified by control plane 121. Device 101 transfers a power saving mode update message to control plane 121 over access network 111. The update message indicates device 101 is available to receive wireless transmissions as well as other information like device tracking area, device location, and the like. For example, the update message may comprise a Tracking Area Update (TAU) message. It typically takes a period of time (e.g., a few seconds) for device 101 to wake up from power saving mode, enter the PTW, and transfer the update message to control plane 121. It should be appreciated that control plane 121 determines device 101 has exited power saving mode when it receives the update message. As such, control plane 121 is typically unable to transmit messages to device 101 until it receives the update message confirming device 101 is in the PTW.

Control plane 121 receives the power saving mode update message and measures the amount of time between reception of the update message and expiration of the timer. Control plane 121 determines an adjustment time for future retransmit time calculations delivered to text message server 123. For example, if control plane 121 received the update message four seconds after the expiration of the power saving mode timer, control plane 121 determines an adjustment time of four seconds. While the PTW for device 101 is still active, message server 123 detects the expiration of the retransmission timer. In response, message server 123 retransmits the text message to control plane 121. Control plane 121 transfers the text message to user device 101 over access network 111. Since the PTW for device 101 is still active, device 101 successfully receives the text message from access network 111.

Subsequent to reception of the text message, the PTW for device 101 ends. Due to continued lack of user activity (or in response to user input), device 101 reenters power saving mode. Device 101 transfers another power saving mode indication to control plane 121 over access network 111. Control plane 121 selects another power saving mode timer and another PTW for device 101. Control plane 121 starts its copy of the power saving mode timer and indicates the power saving mode time and PTW to device 101 over access network 111. User device 101 sets its copy of the power saving mode timer. It should be appreciated that power saving mode times and PTWs for device 101 may repeat cyclically until device 101 exists power saving mode (e.g., in response to user activity).

While user device 101 is the second power saving mode cycle, data network 131 transfers a second text message to text message server 123. Server 123 transfers the text message to control plane 121 based on control plane 121's association with device 101. Control plane 121 determines the second power saving mode timer for device 101 is still active. In response, control plane 121 calculates a learned retransmission time for server 123 to retransmit the message based on the remaining time on the power saving mode timer and the time adjustment. The learned retransmit time falls within the PTW of device 101 but occurs after device 101 transfers the power saving mode update message. Control plane 121 directs text message server 123 to retransmit the text message at the learned retransmission time. Message server 123 sets a retransmission timer based on the learned retransmission time. For example, control plane 121 may utilize the following algorithm to select the learned retransmission time:

$$RTX_L \; time = PSM_c + TA \qquad (2)$$

where $RTX_L \; time$ is the learned retransmit time, $PSM_c$ is the power saving mode timer value at reception of the text message, and $TA$ is the time adjustment calculated based on the amount of time between expiration of the initial power saving mode timer and reception of the initial power saving mode update message. For example, when implementing equation (2), if control plane 121 receives the text message with 90 seconds remaining on the timer and the time adjustment was set to be 3 seconds, control plane 121 determines a learned retransmit time of 93 seconds. Control plane 121 may then direct messaging server 123 to retransmit the text message 93 seconds in the future. By utilizing the time adjustment and remaining time on the power saving mode timer to select learned retransmission times, control plane 121 inhibits messaging server 123 from retransmitting text messages to control plane 121 before control plane 121 receives the power saving mode update message from device 101. By inhibiting early retransmission of text messages, control plane 121 lowers the likelihood of message delivery failure to device 101.

Subsequently, control plane 121 and user device 101 detect the expiration of the second power saving mode timer. In response, user device 101 enters the second PTW specified by control plane 121. Device 101 transfers a second power saving mode update message to control plane 121 over access network 111. The update message indicates device 101 is available to receive wireless transmissions. While the PTW for device 101 is still active, message server 123 detects the expiration of the learned retransmission timer. In response, message server 123 retransmits the text message to control plane 121. Control plane 121 transfers the text message to user device 101 over access network 111. Since the second PTW for device 101 is still active, device 101 successfully receives the text message from access network 111.

Advantageously, wireless communication network 100 effectively and efficiently selects message retransmission times for message server 123 when user device 100 is in power saving mode.

User device 101 comprises a vehicle, drone, robot, computer, phone, sensor, or another type of data appliance with wireless and/or wireline communication circuitry. User device 101 and access network 111 communicate over links using wireless/wireline technologies like Sixth Generation Radio (6GR), Fifth Generation New Radio (5GNR), Long Term Evolution (LTE), Institute of Electrical and Electronic Engineers (IEEE) 802.11 (WIFI), Low-Power Wide Area Network (LP-WAN), Bluetooth, and/or some other type of wireless networking protocol. The wireless technologies use electromagnetic frequencies in the low-band, mid-band, high-band, or some other portion of the electromagnetic spectrum. The wired connections comprise metallic links, glass fibers, and/or some other type of wired interface.

Although access network 111 is illustrated as a tower, network 111 may comprise another type of mounting structure (e.g., a building), or no mounting structure at all. Access network 111 comprises a Sixth Generation (6G) Radio Access Network (RAN), Fifth Generation (5G) RAN, LTE RAN, gNodeB, eNodeB, NB-IoT access node, trusted non-3GPP access node, untrusted non-3GPP access node, LP-WAN base station, wireless relay, WIFI hotspot, Bluetooth access node, and/or another wireless or wireline network transceiver. Access network 111 exchanges network signaling and user data with network functions/elements clustered together into core network 120. Access network 111 is connected to network core 120 over backhaul data links. Access network 111 and core network 120 may communicate via edge networks like internet backbone providers, edge computing systems, or another type of edge system to provide the backhaul data links between node 111 and core network 120.

Access network 111 may comprise Radio Units (RUs), Distributed Units (DUs) and Centralized Units (CUs). The RUs may be mounted at elevation and have antennas, modulators, signal processors, and the like. The RUs are connected to the DUs which are usually nearby network computers. The DUs handle lower wireless network layers like the Physical Layer (PHY), Media Access Control (MAC), and Radio Link Control (RLC). The DUs are connected to the CUs which are larger computer centers that are closer to the network cores. The CUs handle higher wireless network layers like the Radio Resource Control (RRC), Service Data Adaption Protocol (SDAP), and Packet Data Convergence Protocol (PDCP). The CUs are coupled to network functions in core network 120. Access network 111 may also comprise Baseband Units (BBUs). The BBUs handle lower and higher network layers like RRC, PDCP, RLC, MAC, and PHY. The BBUs are coupled to network entities in core 120.

Core network 120 is representative of computing systems that provide wireless data services to user device 101 over access network 111. Exemplary computing systems comprise Network Function Virtualization Infrastructure (NFVI) systems, data centers, server farms, cloud computing networks, hybrid cloud networks, and the like. Core network 120 may comprise a Third Generation Partnership Project (3GPP) core network architecture like Sixth Generation Core (6GC), Fifth Generation Core (5GC), Evolved Packet Core (EPC), and/or another type of 3GPP core network architecture. Access network 111, core network 120, and data network 131 communicate over various links that use metallic links, glass fibers, radio channels, or some other communication media. The links use 6GC, 5GC, EPC, IEEE 802.3 (ENET), Time Division Multiplex (TDM), Data Over Cable System Interface Specification (DOCSIS), Internet Protocol (IP), General Packet Radio Service Transfer Protocol (GTP), 6GR, 5GNR, LTE, WIFI, virtual switching, inter-processor communication, bus interfaces, and/or some other data communication protocols. The computing systems of core network 120 store and execute the network functions/entities to form control plane 121, user plane 122, and text message server 123. Control plane 121 may comprise network functions/entities like Access and Mobility Management Function (AMF), Session Management Function (SMF), Short Message Service Function (SMSF), Unified Data Management (UDM), Mobility Management Entity (MME), and Home Subcriber Server (HSS). User plane 122 comprises network functions/entities like User Plane Function (UPF), Serving Gateway (S-GW), Packet Gateway (P-GW). Text message server 123 comprises network functions/entities like Short Message Service Center (SMSC) and the like. Data network 131 comprises an Application Server (AS) that hosts applications (e.g., media streaming applications, SMS applications, etc.) for device 101.

User device 101 and access network 111 comprise antennas, amplifiers, filters, modulation, analog/digital interfaces, microprocessors, software, memories, transceivers, bus circuitry, and the like. User device 101, access network 111, core network 120, and data network 131 comprise microprocessors, software, memories, transceivers, bus circuitry, and the like. The microprocessors comprise Digital Signal Processors (DSP), Central Processing Units (CPU), Graphical Processing Units (GPU), Application-Specific Integrated Circuits (ASIC), Field Programmable Gate Array (FPGA), and/or the like. The memories comprise Random Access Memory (RAM), flash circuitry, disk drives, and/or the like. The memories store software like operating systems, user applications, radio applications, and network functions. The microprocessors retrieve the software from the memories and execute the software to drive the operation of wireless communication network 100 as described herein.

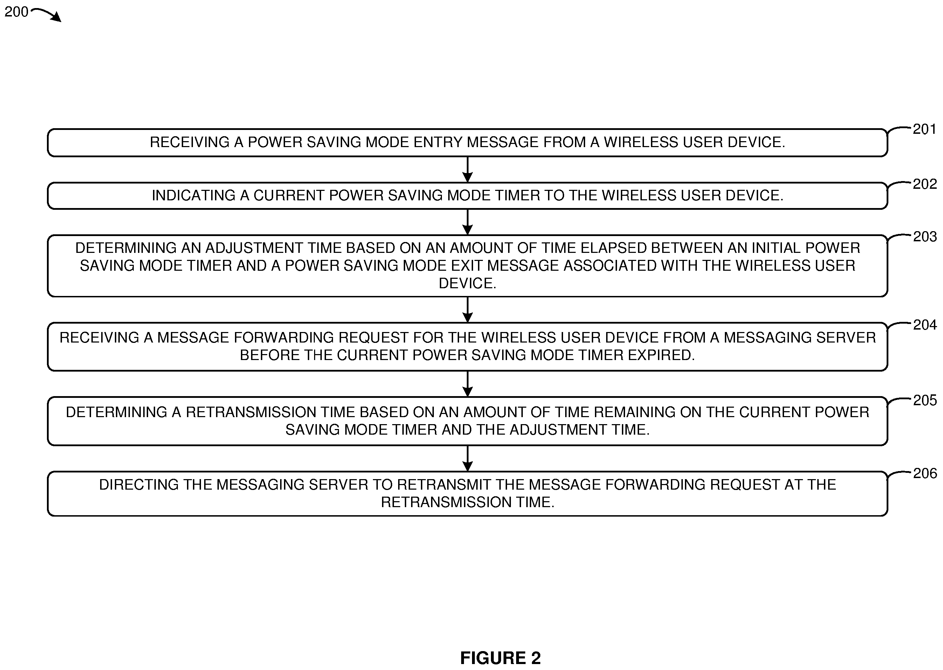

Figure 2 illustrates process 200. Process 200 comprises an exemplary operation of communication network 100 to adjust retransmission times for message delivery to user devices when in power saving mode. The operation may vary in other examples. The operations of process 200 comprise receiving a power saving mode entry message from a wireless user device (step 201). The operations further comprise indicating a current power saving mode timer to the wireless user device (step 202). The operations further comprise determining an adjustment time based on an amount of time elapsed between an initial power saving mode timer and a power saving mode exit message associated with the wireless user device (step 203). The operations further comprise receiving a message forwarding request for the wireless user device from a messaging server before the current power saving mode update timer expired (step 204). The operations further comprise determining a retransmission time based on an amount of time remaining on the current power saving mode timer and the adjustment time (step 205). The operations further comprise directing the messaging server to retransmit the message forwarding request at the retransmission time (step 206).

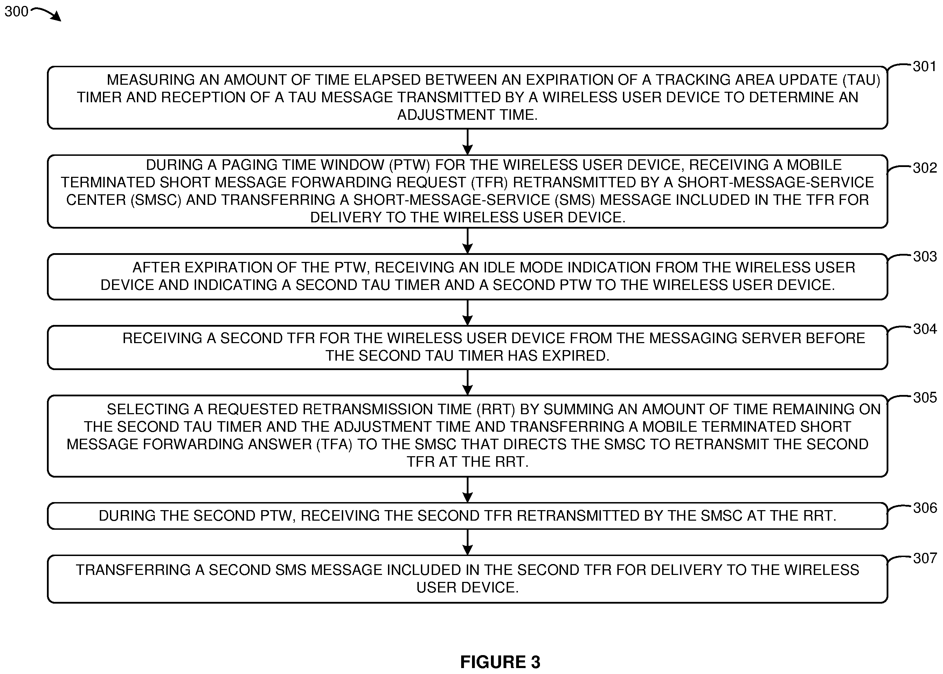

Figure 3 illustrates process 300. Process 300 comprises an exemplary operation of communication network 100 to adjust retransmission times for message delivery to user devices when in power saving mode. Process 300 comprises an example of process 200 illustrated in Figure 2, however process 200 may differ. The operation may vary in other examples. The operations of process 300 comprise measuring an amount of time elapsed between an expiration of a TAU timer and reception of a TAU message transmitted by a wireless user device to determine an adjustment time (step 301). The TAU timer indicates when the wireless user device is in power saving mode. The operations further comprise, during a PTW for the wireless user device, receiving a Mobile Terminated Short Forwarding Message Request (TFR) retransmitted by an SMSC and transferring an SMS message included in the TFR for delivery to the wireless user device (step 302). The operations further comprise, after expiration of the PTW, receiving an idle mode indication from the wireless user device and indicating a second TAU timer and a second PTW to the wireless user device (step 303). The operations further comprise receiving a second TFR for the wireless user device from the messaging server before the second TAU timer has expired (step 304). The operations further comprise selecting a Requested Retransmission Time (RRT) by summing an amount of time remaining on the second TAU timer and the adjustment time and transferring a Mobile Terminated Short Message Forwarding Answer (TFA) to the SMSC that directs the SMSC to retransmit the second TFR at the RRT (step 305). The operations further comprise, during the second PTW, receiving the second TFR retransmitted by the SMSC at the RRT (step 306). The operations further comprise transferring a second SMS message included in the second TFR for delivery to the wireless user device (step 307).

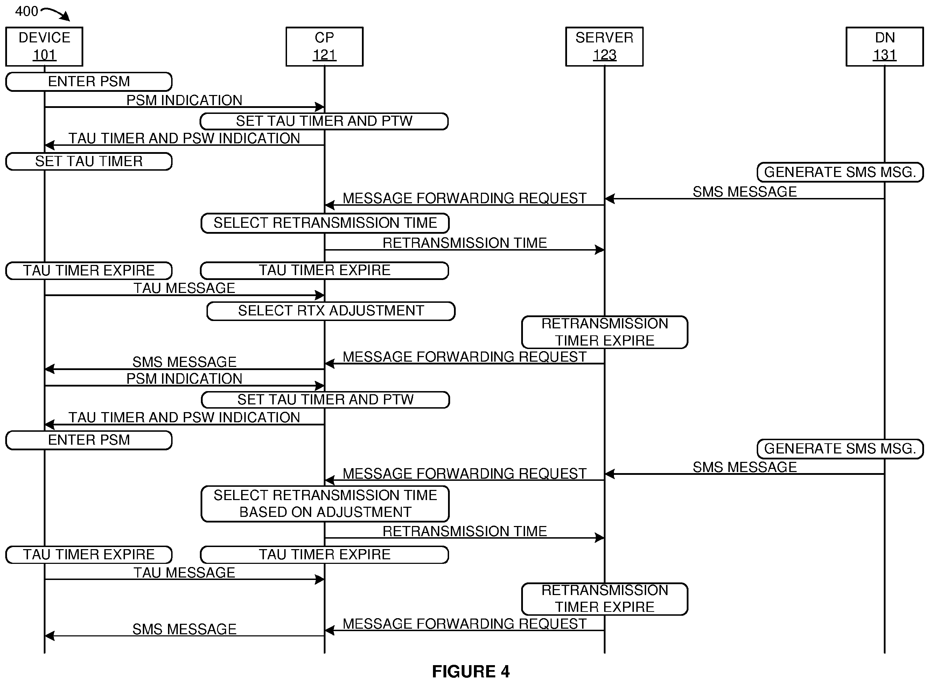

Figure 4 illustrates process 400. Process 400 comprises an exemplary operation of wireless communication network 100 to adjust retransmission times for message delivery to user devices when in power saving mode. Process 400 comprises an example of process 200 illustrated in Figure 2 and process 300 illustrated in Figure 3, however processes 200 and 300 may differ. The operation may vary in other examples. In some examples, user device 101 detects a user inactivity event and decides to enter power saving mode (PSM) to conserve battery power. For example, when the user stops using device 101, device 101 may set an inactivity timer (e.g., five minutes) and upon expiration of the timer, detect the inactivity event. User device 101 wirelessly transfers a power saving mode indication to control plane (CP) 121 over access network 111. Control plane 121 selects a TAU timer and PTW for device 101. Control plane 121 starts its copy of the TAU timer and indicates the TAU timer and PTW to user device 101 over access network 111. User device 101 sets its copy of the TAU timer and enters power saving mode.

While device 101 is in power saving mode, data network 131 generates an SMS message (MSG.) for device 101 and transfers the SMS message to text message server 123. Message server 123 accesses a catalog that associates devices with control planes in network 100 and determines device 101 is registered with control plane 121. For example, the catalog may store subscriber Identifiers (IDs), device IDs, device Internet Protocol (IP) addresses, and/or other device indications in association with the network addresses of the control planes in network 100. Message server 123 transfers a message forwarding request to control plane 121. The request directs control plane 121 to forward the SMS message to device 101. Control plane 121 checks the status of the TAU timer for device 101 and determines device 101 is in power saving mode and therefore unreachable. Control plane 121 selects a retransmission time for server 123 to resend the SMS message by summing the remining time on the TAU timer and one-half of the PTW. Control plane 121 indicates the selected retransmission time to server 123. Message server 123 sets a retransmission timer equal to the retransmission time.

User device 101 and control plane 121 detect the expiration of the TAU timer. User device 101 exits power saving mode and enters the PTW. Device 101 wirelessly transfers a TAU message to control plane 121 over access network 111. The TAU message notifies control plane 121 which access network device 101 is attached to and indicates that device 101 has entered the PTW. Control plane 121 receives the TAU message and determines the amount of time between expiration of its copy of the TAU timer and the reception of the TAU message. Control plane 121 selects a retransmission (RTX) adjustment time equal to the amount of time between expiration of the TAU timer and reception of the TAU message.

Message server 123 detects the expiration of the retransmission timer and retransmits the message forwarding request to control plane 121. Control plane 121 identifies the TAU timer for device 101 is expired and determines device 101 is in the PTW and therefore reachable. Control plane 121 returns an acknowledgment to server 123 that the message will be delivered. Control plane 121 transfers the SMS message to device 101 over access network 111. Since device 101 is in the PTW, device 101 successfully receives the SMS message.

User device 101 determines the PTW has ended and identifies that user activity has not resumed. User device 101 decides to reenter power saving mode to conserve battery power. User device 101 wirelessly transfers a power saving mode indication to control plane 121 over access network 111. Control plane 121 selects a TAU timer and PTW for device 101. Control plane 121 starts its copy of the TAU timer and indicates the TAU timer and PTW to user device 101 over access network 111. User device 101 sets its copy of the TAU timer and enters power saving mode.

While device 101 is in power saving mode, data network 131 generates another SMS message for device 101 and transfers the SMS message to text message server 123. Message server 123 determines device 101 is registered with control plane 121 and transfers a message forwarding request to control plane 121. Control plane 121 checks the status of the TAU timer for device 101 and determines device 101 is in again in power saving mode and therefore unreachable. Control plane 121 selects a retransmission time for server 123 to resend the SMS message by summing the remining time on the TAU timer and transmission time adjustment calculated based on the amount of time between expiration of the TAU timer on control plane 121 and reception of the initial TAU message from device 101. Control plane 121 indicates the selected retransmission time to server 123. Message server 123 sets a retransmission timer equal to the retransmission time.

User device 101 and control plane 121 detect the expiration of the TAU timer. User device 101 exits power saving mode and enters the PTW. Device 101 wirelessly transfers a TAU message to control plane 121 over access network 111. The TAU message notifies control plane 121 which access network device 101 is attached to and indicates that device 101 has entered the PTW. Since control plane 121 has already determined the retransmission time adjustment for device 101, control plane 121 does not recalculate the amount of time between expiration the TAU timer and the reception of the TAU message. However, in other examples, control plane 121 may recalculate the adjustment multiple times for device 101 (e.g., each time control plane 121 receives a TAU message).

Message server 123 detects the expiration of the retransmission timer and retransmits the message forwarding request to control plane 121. Control plane 121 identifies the TAU timer for device 101 is expired and determines device 101 is in the PTW and therefore reachable. Control plane 121 returns an acknowledgment to server 123 that the message will be delivered. Control plane 121 transfers the SMS message to device 101 over access network 111. Since device 101 is in the PTW, device 101 successfully receives the SMS message.

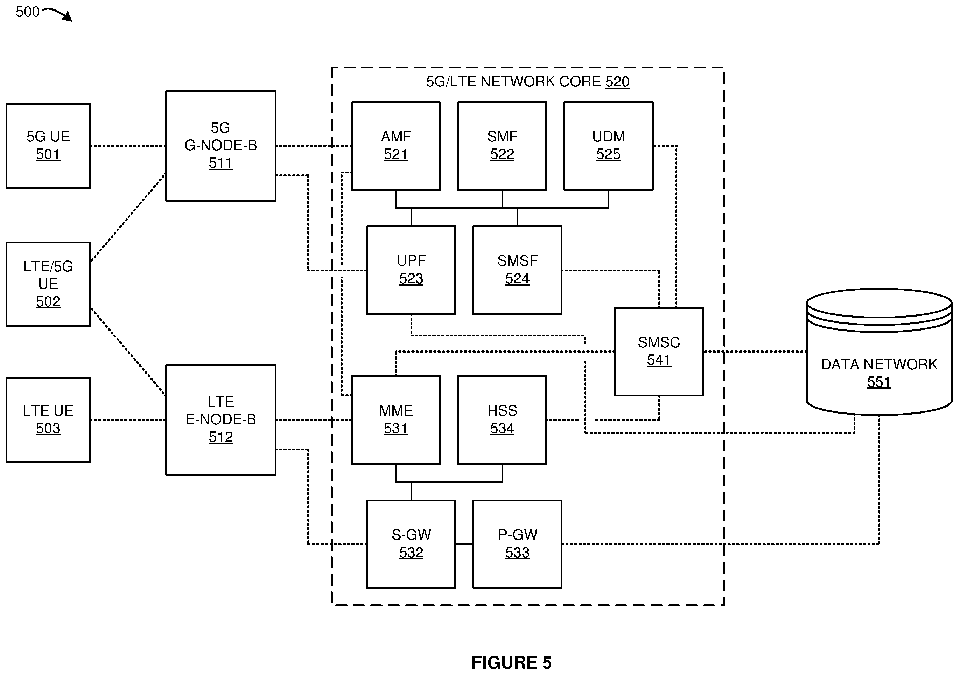

Figure 5 illustrates 5G/LTE communication network 500 to adjust retransmission times for message delivery to user devices when in power saving mode. 5G/LTE communication network 500 comprises an example of communication network 100 illustrated in Figure 1, however network 100 may differ. 5G/LTE communication network 500 comprises 5G UE 501, 5G/LTE UE 502, LTE UE 503, 5G gNodeB 511, LTE eNodeB 512, 5G/LTE network core 520, and data network 551. 5G/LTE network core 520 comprises AMF 521, SMF 522, UPF 523, SMSF 524, UDM 525, MME 531, S-GW 532, P-GW 533, HSS 534, and SMSC 541. Other network functions and network entities like Authenticating Server Function (AUSF), Network Slice Selection Function (NSSF), Unified Data Registry (UDR), Home Subscriber Register (HLR), Network Repository Function (NRF), Policy Control Function (PCF), Network Exposure Function (NEF), Application Function (AF), Equipment Identity Register (EIR), Session Communication Proxy (SCP), and Diameter Routing Agent (DRA) are typically present in 5G/LTE network core 520 but are omitted for clarity. In other examples, 5G/LTE communication network 500 may comprise different or additional elements than those illustrated in Figure 5.

In some examples, 5G UE 501 wirelessly attaches to gNodeB 511. 5G UE 501 undergoes a Random Access Channel (RACH) procedure with gNodeB 511 to establish a secure signaling channel. 5G UE 501 transfers a registration request to AMF 521 over gNodeB 511. The registration requests include information like registration type, 5G-Globally Unique Temporary Identifier (5G-GUTI), Tracking Area ID (TAI), Network Slice Selection Assistance Information (NSSAI) requests, UE capabilities, Protocol Data Unit (PDU) session requests, and the like. In response to the registration request, AMF 521 transfers an identity request to 5G UE 501 over gNodeB 511. UE 501 indicates its identity to AMF 521 over gNodeB 511. Exemplary identity indications include Subscriber Concealed Identifier (SUCI) and the like. AMF 521 interacts with UDM 525 and typically other network functions to authenticate the identity of UE 501 and authorize UE 501 for wireless data service. Responsive to the authentication and authorization, AMF 521 registers UE 501 for service on network 500.

AMF 521 transfers a context registration request to UDM 525 that includes AMF ID, a supported feature list, a Permanent Equipment Identifier (PEI) for UE 501, and the like. UDM 525 indicates successful UDM registration to AMF 521. In response, AMF 521 requests access and mobility subscription data, SMS selection subscription data, and UE context in SMF data from UDM 525. UDM 525 accesses the subscriber profile for UE 501 and returns the requested data. The access and mobility subscription data comprises a supported feature list for UE 501 (e.g., Quality of Service Class Indicator (QCI), Aggregate Maximum Bit Rate (AMBR), latency, voice/video calling, internet access, etc.), a General Public Subscription Identifier (GPSI) array, slice selection information, and the like. The SMF selection data comprises a supported feature list, and a list of S-NSSAIs and associated information. The UE context in SMF data comprises PDU session and EPC interworking information. AMF 521 forms the UE context for UE 501 using the retrieved information.

AMF 521 selects SMF 522 to serve UE 501 based on SMF selection data. AMF 521 may also select one or more network slices for UE 501 based on the slice selection information. AMF 521 directs SMF 522 to establish a PDU session for UE 501 based on the UE context. SMF 522 selects UPF 523 to serve UE 501 based on the requested PDU sessions and notifies AMF 521 the session is ready to begin. AMF 521 transfers the UE context to UE 501 over gNodeB 511. In response to user input, UE 501 launches a user application and uses the UE context to establish PDU sessions. UE 501 exchanges user data with UPF 523 over gNodeB 511. UPF 523 exchanges the user data with data network 551.

Similar to 5G UE 501, LTE UE 503 wirelessly attaches to eNodeB 512 and undergoes a RACH procedure to establish a secure link with eNodeB 512. LTE UE 503 transfers an attach request (analogous to the registration request transferred by 5G UE 501) to MME 531 over eNodeB 512. The attach requests include information like attach type, GUTI, TAI, encryption data, network selection data, and the like. In response to the attach request, MME 531 transfers an identity request to LTE UE 503 over eNodeB 513 and UE 503 responds with an identity indication. MME 531 interacts with HSS 534 to authenticate the identity of UE 501 and authorize UE 501 for wireless data service. Responsive to the authentication and authorization, MME 531 registers UE 503 for service on network 500.

MME 531 transfers an update location request to HSS 534 that includes UE location information, International Mobile Subscriber Identifier (IMSI), Public Land Mobility Network (PLMN) ID, and the like. HSS 534 accesses a subscriber profile for UE 503 to update the location of UE 503 and retrieve subscriber data. HSS 534 transfers an update location request answer to MME 531. The update location request answer comprises the IMSI for UE 503, uplink/downlink AMBR, Mobile Subscriber Integrated Services Digital Network (MSISDN), and Access Point Name (APN) data (e.g., P-GW address, QCI, charging data, etc.). MME 531 generates UE context using the retrieved information and directs S-GW 532 to create a session for UE 503 based on the context. S-GW 532 interfaces with P-GW 533 to establish signaling bearers for the session. S-GW 532 notifies MME 531 the session is ready. MME 531 transfers the UE context to UE 503 over eNodeB 512. In response to user input, UE 503 launches a user application and uses the UE context to establish sessions. UE 501 exchanges user data with S-GW 532 over eNodeB 512. S-GW 532 exchanges the user data with P-GW 533. P-GW 533 exchanges the user data with data network 551.

Similar to 5G UE 501 and LTE UE 503, 5G/LTE UE 502 allows registers with and begins a data session on network core 520. Since UE 502 comprises both LTE and 5G capabilities, UE 502 may register and begin a session over 5G gNodeB 511 or LTE eNodeB 512. When attaching over 5G gNodeB 511, UE 502 registers and establishes a session as described for 5G UE 501. When attaching over LTE eNodeB 512, UE 502 registers and establishes a session as described for LTE UE 503. For example, when the received signal strength for LTE eNodeB 512 exceeds the received signal strength for 5G gNodeB 511, UE 502 may elect to register with network of eNodeB 512. Likewise, when the received signal strength for 5G gNodeB 511 exceeds the received signal strength for LTE eNodeB 512, UE 502 may elect to register with network of 5G gNodeB 511.

In response to a user input, 5G UE 501 ends its PDU session over gNodeB 511. UE 501 sets a user inactivity timer. During the duration of the time, UE 501 does not receive user input. Upon expiration of the inactivity timer, UE 501 transfers a UE idle message to AMF 521 over gNodeB 511 to notify AMF 521 that UE 501 is entering power saving mode. AMF 521 selects a T3412 timer and PTW for UE 501. AMF 521 indicates the T3412 and PTW values to UE 501 over gNodeB 511. UE 501 and AMF 521 set timers equal to the T3412 value and UE 501 enters power saving mode. While UE 501 is in power saving mode, data network 551 receives an SMS message intended for UE 501 from another UE. Network 551 identifies that UE 501 is camped on network core 520 and forwards the SMS message to SMSC 541. SMSC 541 interfaces with UDM 525 and/or HSS 534 to determine where in network 500 UE 501 is registered. After determining UE 501 is registered with AMF 521, SMSC 541 transfers a TFR that comprises the SMS message to SMSF 524 which delivers the TFR to AMF 521. AMF 521 determines the T3412 timer for UE 501 is still active and UE 501 is therefore still in power saving mode. In response, AMF 521 selects a retransmission time equal to the remaining time on the T3412 plus half the PTW. AMF 521 transfers a TFA that includes the retransmission time to SMSC 541 over SMSF 524. SMSC 541 sets a retransmission timer equal to the retransmission time received in the TFA.

5G UE 501 and AMF 521 detect the expiration of the T3412. UE 501 exits power saving mode and enters its PTW. UE 501 transfers a TAU message to AMF 521 over gNodeB 511 notifying AMF 521 of UE 501's current tracking area (e.g., gNodeB 511) and that UE 501 is reachable. AMF 521 measures the amount of time between expiration of the T3412 and reception of the TAU message to determine an adjustment time for future retransmission time calculations. While the PTW for UE 501 is active, the retransmission timer in SMSC 541 expires and SMSC 541 retransmits the TFR with the SMS message to AMF 521 over SMSF 524. AMF 521 forwards the SMS message to 5G UE 501 over gNodeB 511 and transfers a TFA to SMSC 541 over SMSF 524 to confirm message delivery.

The PTW for UE 501 ends and user activity on UE 501 has not resumed. In response, UE 501 determines to reenter power saving mode. UE 501 transfers a second UE idle message to AMF 521 over gNodeB 511. AMF 521 selects a T3412 timer and PTW for UE 501 and indicates the T3412 and PTW values to UE 501 over gNodeB 511. UE 501 and AMF 521 set T3412 timers and UE 501 reenters power saving mode. While UE 501 is in power saving mode, data network 551 receives another SMS message intended for UE 501. Network 551 forwards the SMS message to SMSC 541. SMSC 541 transfers a TFR that comprises the SMS message to SMSF 524 which delivers the TFR to AMF 521. AMF 521 determines the T3412 timer for UE 501 is still active and UE 501 is therefore still in power saving mode. In response, AMF 521 selects a retransmission time equal to the remaining time on the T3412 plus the retransmission time adjustment. AMF 521 transfers a TFA that includes the retransmission time to SMSC 541 over SMSF 524 which sets a retransmission timer. 5G UE 501 and AMF 521 detect the expiration of the T3412. UE 501 exits power saving mode and enters its PTW. UE 501 transfers a TAU message to AMF 521 over gNodeB 511 notifying AMF 521 of UE 501's current tracking area and that UE 501 is reachable. While the PTW for UE 501 is active, the retransmission timer in SMSC 541 expires and SMSC 541 retransmits the TFR with the SMS message to AMF 521 over SMSF 524. AMF 521 forwards the SMS message to 5G UE 501 over gNodeB 511 and transfers a TFA to SMSC 541 over SMSF 524 to confirm message delivery.

Similar to 5G UE 501, LTE UE 503 ends its PDU session over eNodeB 512 in response to a user input. UE 503 sets a user inactivity timer to determine when to enter power saving mode. Upon expiration of the inactivity timer, LTE UE 503 transfers a UE idle message to MME 531 over eNodeB 512 to notify MME 531 that it is entering power saving mode. MME 531 selects a T3412 timer and PTW for UE 503. MME 531 indicates the T3412 and PTW values to UE 503 over eNodeB 512. UE 503 and MME 531 set T3412 timers and LTE UE 503 enters power saving mode. Data network 551 receives an SMS message intended for UE 503. Network 551 identifies that UE 503 is on network 600 and forwards the SMS message to SMSC 541. SMSC 541 interfaces with UDM 525 and/or HSS 534 to determine where UE 503 is registered in network 500. After determining UE 503 is registered with MME 531, SMSC 541 transfers a TFR that comprises the SMS message to MME 531. MME 531 checks the T3412 timer for UE 503 and determines that UE 503 is in power saving mode. In response, MME 531 selects a retransmission time equal by summing the remaining time on the T3412 and half of the PTW. MME 531 transfers a TFA that includes the retransmission time to SMSC 541 which then sets a retransmission timer.

LTE UE 503 and MME 531 detect the expiration of the T3412. UE 503 exits power saving mode and enters its PTW. UE 503 transfers a TAU message to MME 531 over eNodeB 512 to indicate its current tracking area and PTW status. MME 531 measures the amount of time between expiration of the T3412 and reception of the TAU message to determine an adjustment time for future retransmission time calculations. While the PTW for UE 503 is active, the retransmission timer in SMSC 541 expires and SMSC 541 retransmits the TFR with the SMS message to MME 531. MME 531 forwards the SMS message to LTE UE 503 over eNodeB 512 and transfers a TFA to SMSC 541 over SMSF 524 to confirm message delivery.

UE 503 determines the PTW has ended, and user activity has not resumed. UE 503 decides to reenter power saving mode and transfers a second UE idle message to MME 531 over eNodeB 512. MME 531 indicates the T3412 and PTW values to UE 503 over eNodeB 512. UE 503 and MME 531 set T3412 timers and UE 503 reenters power saving mode. Data network 551 receives another SMS message intended for UE 503. Network 551 forwards the SMS message to SMSC 541 which transfers a TFR that comprises the SMS message to MME 531. MME 531 identifies that the T3412 timer for UE 503 is active and in response, selects a retransmission time by summing the remaining time on the T3412 and the retransmission time adjustment. MME 531 transfers a TFA that includes the retransmission time to SMSC 541 which then sets a retransmission timer. LTE UE 503 and MME 531 detect the expiration of the T3412. UE 503 exits power saving mode and enters its PTW. UE 503 transfers a TAU message to MME 531 over eNodeB 512. While the PTW for UE 503 is active, the retransmission timer in SMSC 541 expires and SMSC 541 retransmits the TFR with the SMS message to MME 531. MME 531 forwards the SMS message to LTE UE 503 over eNodeB 512 and transfers a TFA to SMSC 541 to confirm message delivery.

AMF 521 and MME 531 may calculate retransmission times and deliver SMS messages to 5G/LTE UE 502. When UE 502 registers with network 600 over gNodeB 511, AMF 521 calculates retransmission times and delivers SMS messages to UE 502 as described above for 5G UE 501. Likewise, when UE 502 registers with network 600 over eNodeB 512, MME 531 calculates retransmission times and delivers SMS messages to UE 502 as described above for LTE UE 503.

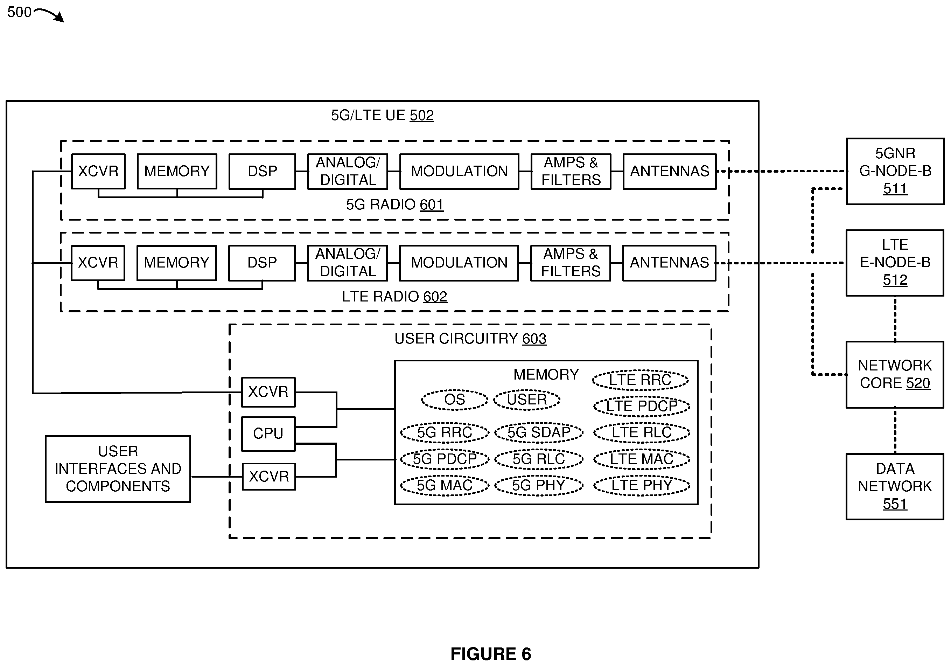

Figure 6 illustrates 5G/LTE UE 502 in 5G/LTE communication network 500. UE 501 comprises an example of user device 101, although user device 101 may differ. UE 502 comprises 5G radio 601, LTE radio 602, and user circuitry 603. UE 501 and UE 503 comprise similar architecture to UE 502 however 5G UE 501 omits the LTE radio and LTE radio applications while LTE UE 503 omits the 5G radio and 5G radio applications. 5G Radio 601 comprises 5GNR antennas, amplifiers, filters, modulation, analog-to-digital interfaces, Digital Signal Processers (DSP), memory, and transceivers (XCVRs) that are coupled over bus circuitry. User circuitry 603 comprises memory, CPU, user interfaces and components, and transceivers that are coupled over bus circuitry. LTE Radio 602 comprises LTE antennas, amplifiers, filters, modulation, analog-to-digital interfaces, Digital Signal Processers (DSP), memory, and transceivers (XCVRs) that are coupled over bus circuitry. User circuitry 603 comprises memory, CPU, user interfaces and components, and transceivers that are coupled over bus circuitry.

The memory in user circuitry 603 stores an operating system (OS), user applications, 5GNR network applications for PHY, MAC, RLC, PDCP, SDAP, and RRC, and LTE network applications for PHY, MAC, RLC, PDCP, and RRC. In some examples, the memory stores a single RRC that handles both 5GNR and LTE signaling. The antenna in 5G radio 601 is wirelessly coupled to 5G gNodeB 511 over a 5GNR link. The antenna in LTE radio 602 is wirelessly coupled to LTE eNodeB 512. Transceivers in radios 601 and 602 are coupled to a transceiver in user circuitry 603. A transceiver in user circuitry 603 is typically coupled to the user interfaces and components like displays, controllers, and memory.

In 5G radio 601, the antennas receive wireless signals from 5G gNodeB 511 that transport downlink 5GNR signaling and data. The antennas transfer corresponding electrical signals through duplexers to the amplifiers. The amplifiers boost the received signals for filters which attenuate unwanted energy. Demodulators down-convert the amplified signals from their carrier frequency. The analog/digital interfaces convert the demodulated analog signals into digital signals for the DSPs. The DSPs transfer corresponding 5GNR symbols to user circuitry 603 over the transceivers. In user circuitry 603, the CPU executes the network applications to process the 5GNR symbols and recover the downlink 5GNR signaling and data. The 5GNR network applications receive new uplink signaling and data from the user applications. The network applications process the uplink user signaling and the downlink 5GNR signaling to generate new downlink user signaling and new uplink 5GNR signaling. The network applications transfer the new downlink user signaling and data to the user applications. The 5GNR network applications process the new uplink 5GNR signaling and user data to generate corresponding uplink 5GNR symbols that carry the uplink 5GNR signaling and data.

In 5G radio 601, the DSP processes the uplink 5GNR symbols to generate corresponding digital signals for the analog-to-digital interfaces. The analog-to-digital interfaces convert the digital uplink signals into analog uplink signals for modulation. Modulation up-converts the uplink analog signals to their carrier frequency. The amplifiers boost the modulated uplink signals for the filters which attenuate unwanted out-of-band energy. The filters transfer the filtered uplink signals through duplexers to the antennas. The electrical uplink signals drive the antennas to emit corresponding wireless 5GNR signals to 5G gNodeB 511 that transport the uplink 5GNR signaling and data.

In LTE radio 602, the antennas receive wireless signals from LTE eNodeB 512 that transport downlink LTE signaling and data. The antennas transfer corresponding electrical signals through duplexers to the amplifiers. The amplifiers boost the received signals for filters which attenuate unwanted energy. Demodulators down-convert the amplified signals from their carrier frequency. The analog/digital interfaces convert the demodulated analog signals into digital signals for the DSPs. The DSPs transfer corresponding LTE symbols to user circuitry 603 over the transceivers. In user circuitry 603, the CPU executes the network applications to process the LTE symbols and recover the downlink LTE signaling and data. The LTE network applications receive new uplink signaling and data from the user applications. The network applications process the uplink user signaling and the downlink LTE signaling to generate new downlink user signaling and new uplink LTE signaling. The network applications transfer the new downlink user signaling and data to the user applications. The LTE network applications process the new uplink LTE signaling and user data to generate corresponding uplink LTE symbols that carry the uplink LTE signaling and data.

In LTE radio 602, the DSP processes the uplink LTE symbols to generate corresponding digital signals for the analog-to-digital interfaces. The analog-to-digital interfaces convert the digital uplink signals into analog uplink signals for modulation. Modulation up-converts the uplink analog signals to their carrier frequency. The amplifiers boost the modulated uplink signals for the filters which attenuate unwanted out-of-band energy. The filters transfer the filtered uplink signals through duplexers to the antennas. The electrical uplink signals drive the antennas to emit corresponding wireless LTE signals to LTE eNodeB 512 that transport the uplink LTE signaling and data.

RRC functions comprise authentication, security, handover control, status reporting, QoS, network broadcasts and pages, and network selection. SDAP functions comprise QoS marking and flow control. PDCP functions comprise security ciphering, header compression and decompression, sequence numbering and resequencing, de-duplication. RLC functions comprise Automatic Repeat Request (ARQ), sequence numbering and resequencing, segmentation and resegmentation. MAC functions comprise buffer status, power control, channel quality, Hybrid ARQ (HARQ), user identification, random access, user scheduling, and QoS. PHY functions comprise packet formation/deformation, windowing/de-windowing, guard-insertion/guard-deletion, parsing/de-parsing, control insertion/removal, interleaving/de-interleaving, Forward Error Correction (FEC) encoding/decoding, channel coding/decoding, channel estimation/equalization, and rate matching/de-matching, scrambling/descrambling, modulation mapping/de-mapping, layer mapping/de-mapping, precoding, Resource Element (RE) mapping/de-mapping, Fast Fourier Transforms (FFTs)/Inverse FFTs (IFFTs), and Discrete Fourier Transforms (DFTs)/Inverse DFTs (IDFTs). User application 703 comprises a user application like a media streaming application, social media application, low-latency application, voice/video conferencing application, online gaming application, extended/virtual reality application, and the like. Diagnostics application 704 functions comprise application usage monitoring, uplink/downlink data throughput monitoring, and user behavior data reporting.

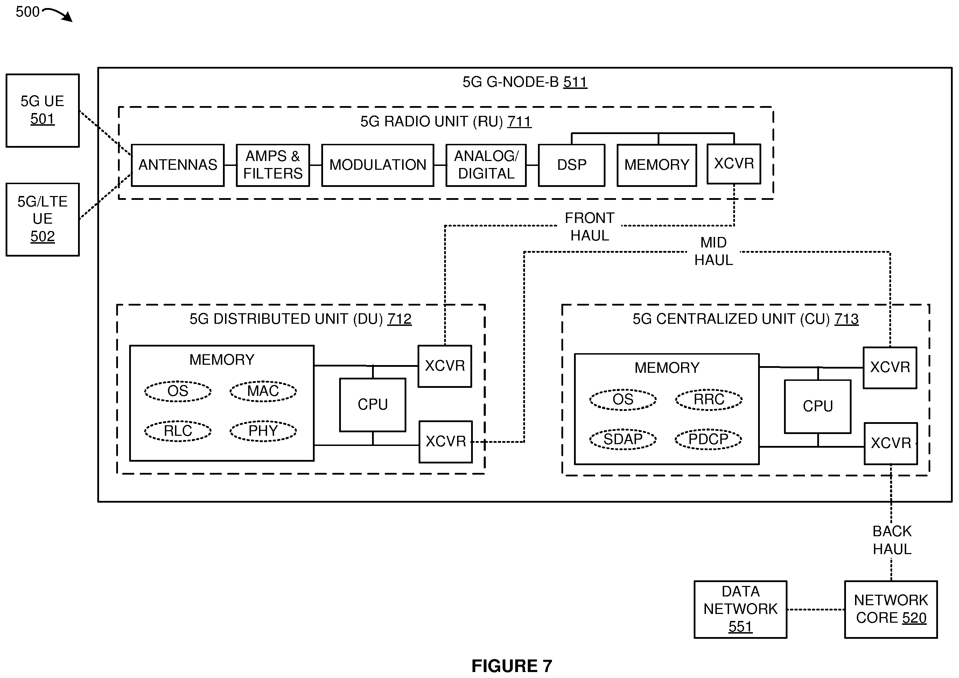

Figure 7 illustrates 5G gNodeB 511 in 5G/LTE communication network 500. 5G gNodeB 511 comprises an example of the access network 111 illustrated in Figure 1, although access network 111 may differ. 5G gNodeB 511 comprises 5G RU 711, 5G DU 712, and 5G CU 713. RU 711 comprises antennas, amplifiers, filters, modulation, analog-to-digital interfaces, DSP, memory, and transceivers (XCVRs) that are coupled over bus circuitry. 5G UE 501 and 5G/LTE UE 502 are wirelessly coupled to the antennas in RU 711 over 5GNR links. Transceivers in 5G RU 711 are coupled to transceivers in 5G DU 712 over fronthaul links like enhanced Common Public Radio Interface (eCPRI). The DSPs in RU 711 executes their operating systems and radio applications to exchange 5GNR signals with 5G UE 501 and 5G/LTE UE 502 and to exchange 5GNR data with DU 712.

For the uplink, the antennas receive wireless signals from UEs 501 and 502 that transport uplink 5GNR signaling and data. The antennas transfer corresponding electrical signals through duplexers to the amplifiers. The amplifiers boost the received signals for filters which attenuate unwanted energy. Demodulators down-convert the amplified signals from their carrier frequencies. The analog/digital interfaces convert the demodulated analog signals into digital signals for the DSPs. The DSPs transfer corresponding 5GNR symbols to DU 712 over the transceivers.

For the downlink, the DSPs receive downlink 5GNR symbols from DU 712. The DSPs process the downlink 5GNR symbols to generate corresponding digital signals for the analog-to-digital interfaces. The analog-to-digital interfaces convert the digital signals into analog signals for modulation. Modulation up-converts the analog signals to their carrier frequencies. The amplifiers boost the modulated signals for the filters which attenuate unwanted out-of-band energy. The filters transfer the filtered electrical signals through duplexers to the antennas. The filtered electrical signals drive the antennas to emit corresponding wireless signals to UEs 501 and 502 that transport the downlink 5GNR signaling and data.

DU 712 comprises memory, CPU, and transceivers that are coupled over bus circuitry. The memory in 5G DU 712 stores operating systems and 5GNR network applications like PHY, MAC, and RLC. CU 713 comprises memory, CPU, and transceivers that are coupled over bus circuitry. The memory in CU 713 stores an operating system and 5GNR network applications like PDCP, SDAP, and RRC. Transceivers in 5G DU 712 are coupled to transceivers in RU 711 over front-haul links. Transceivers in DU 712 are coupled to transceivers in CU 713 over mid-haul links. A transceiver in CU 713 is coupled to network core 520 over backhaul links.

RLC functions comprise ARQ, sequence numbering and resequencing, segmentation and resegmentation. MAC functions comprise buffer status, power control, channel quality, HARQ, user identification, random access, user scheduling, and QoS. PHY functions comprise packet formation/deformation, guard-insertion/guard-deletion, parsing/de-parsing, control insertion/removal, interleaving/de-interleaving, FEC encoding/decoding, channel coding/decoding, channel estimation/equalization, and rate matching/de-matching, scrambling/descrambling, modulation mapping/de-mapping, layer mapping/de-mapping, precoding, RE mapping/de-mapping, FFTs/IFFTs, and DFTs/IDFTs. PDCP functions include security ciphering, header compression and decompression, sequence numbering and re-sequencing, de-duplication. SDAP functions include QoS marking and flow control. RRC functions include authentication, security, handover control, status reporting, QoS, network broadcasts and pages, and network selection.

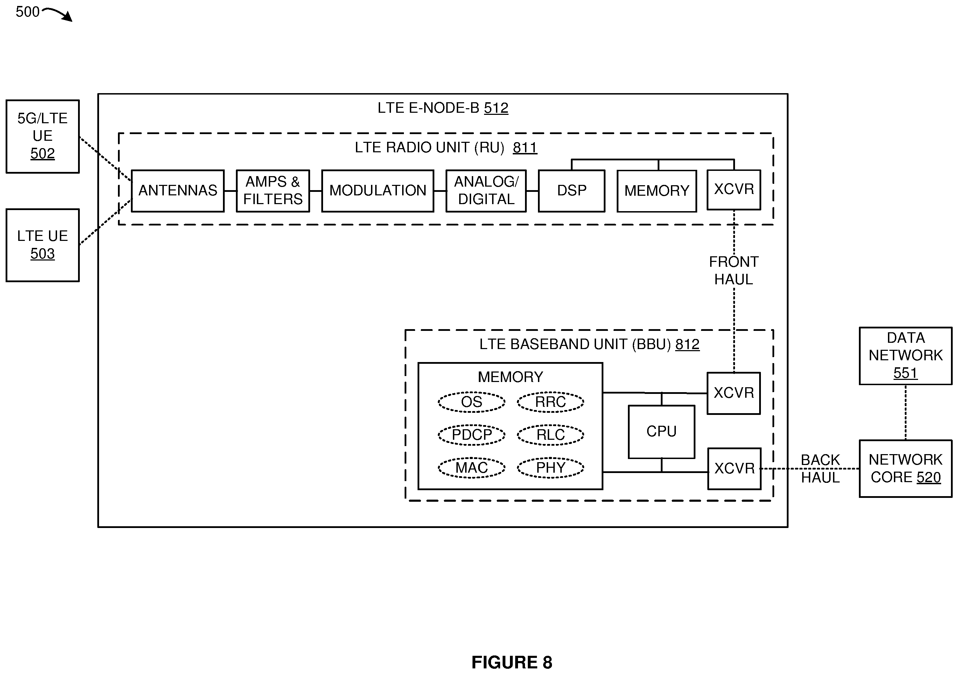

Figure 8 illustrates LTE eNodeB 512 in 5G/LTE communication network 500. LTE eNodeB 512 comprises an example of the access network 111 illustrated in Figure 1, although access network 111 may differ. LTE eNodeB 512 comprises 5G RU 811 and LTE BBU 812. RU 811 comprises antennas, amplifiers, filters, modulation, analog-to-digital interfaces, DSP, memory, and transceivers (XCVRs) that are coupled over bus circuitry. 5G/LTE UE 502 and LTE UE 503 are wirelessly coupled to the antennas in RU 811 over LTE links. Transceivers in LTE RU 811 are coupled to transceivers in LTE BBU 812 over fronthaul links like enhanced Common Public Radio Interface (eCPRI). The DSPs in RU 811 executes their operating systems and radio applications to exchange LTE signals with 5G/LTE UE 502 and LTE UE 503 and to exchange LTE data with LTE BBU 812.

For the uplink, the antennas receive wireless signals from UEs 502 and 503 that transport uplink LTE signaling and data. The antennas transfer corresponding electrical signals through duplexers to the amplifiers. The amplifiers boost the received signals for filters which attenuate unwanted energy. Demodulators down-convert the amplified signals from their carrier frequencies. The analog/digital interfaces convert the demodulated analog signals into digital signals for the DSPs. The DSPs transfer corresponding LTE symbols to BBU 812 over the transceivers.

For the downlink, the DSPs receive downlink LTE symbols from BBU 812. The DSPs process the downlink LTE symbols to generate corresponding digital signals for the analog-to-digital interfaces. The analog-to-digital interfaces convert the digital signals into analog signals for modulation. Modulation up-converts the analog signals to their carrier frequencies. The amplifiers boost the modulated signals for the filters which attenuate unwanted out-of-band energy. The filters transfer the filtered electrical signals through duplexers to the antennas. The filtered electrical signals drive the antennas to emit corresponding wireless signals to UEs 502 and 503 that transport the downlink LTE signaling and data.

BBU 812 comprises memory, CPU, and transceivers that are coupled over bus circuitry. The memory in LTE BBU 812 stores operating systems and LTE network applications like PHY, MAC, RLC, PDCP, and RRC. Transceivers in LTE BBU 812 are coupled to transceivers in LTE RU 811 over front-haul links. A transceiver in BBU 812 is coupled to network core 520 over backhaul links.

RLC functions comprise ARQ, sequence numbering and resequencing, segmentation and resegmentation. MAC functions comprise buffer status, power control, channel quality, HARQ, user identification, random access, user scheduling, and QoS. PHY functions comprise packet formation/deformation, guard-insertion/guard-deletion, parsing/de-parsing, control insertion/removal, interleaving/de-interleaving, FEC encoding/decoding, channel coding/decoding, channel estimation/equalization, and rate matching/de-matching, scrambling/descrambling, modulation mapping/de-mapping, layer mapping/de-mapping, precoding, RE mapping/de-mapping, FFTs/IFFTs, and DFTs/IDFTs. PDCP functions include security ciphering, header compression and decompression, sequence numbering and re-sequencing, de-duplication. SDAP functions include QoS marking and flow control. RRC functions include authentication, security, handover control, status reporting, QoS, network broadcasts and pages, and network selection.

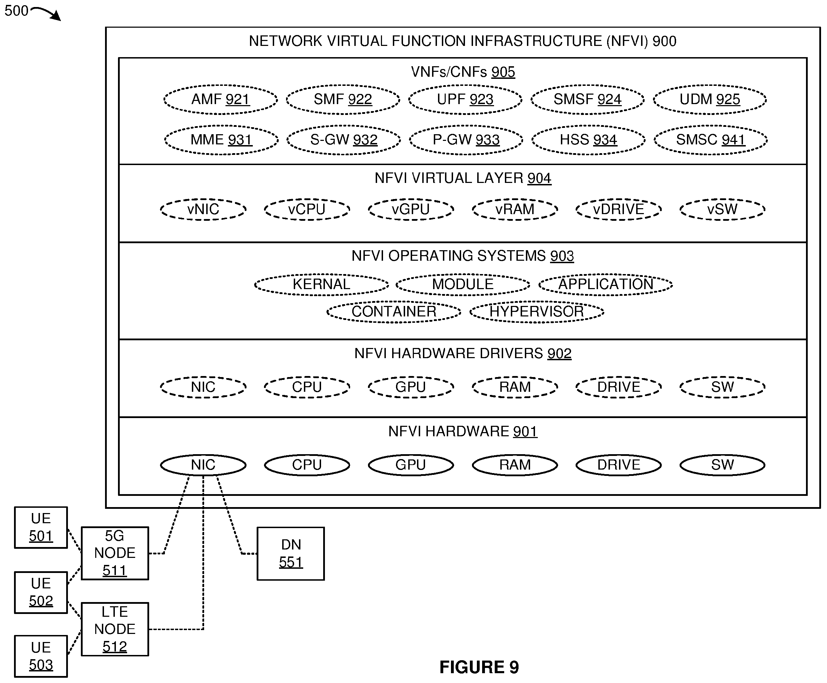

Figure 9 illustrates Network Function Virtualization Infrastructure (NFVI) 900 in 5G/LTE wireless communication network 500. NFVI 900 comprises an example of core network 120 illustrated in Figure 1, although core network 120 and network circuitry 320 may differ. NFVI 900 comprises NFVI hardware 901, NFVI hardware drivers 902, NFVI operating systems 903, NFVI virtual layer 904, and NFVI Virtual Network Functions (VNFs)/Cloud-Native Network Functions (CNFs) 905. NFVI hardware 901 comprises Network Interface Cards (NICs), CPU, GPU, RAM, Flash/Disk Drives (DRIVE), and Data Switches (SW). NFVI hardware drivers 902 comprise software that is resident in the NIC, CPU, GPU, RAM, DRIVE, and SW. NFVI operating systems 903 comprise kernels, modules, applications, containers, hypervisors, and the like. NFVI virtual layer 904 comprises vNIC, vCPU, vGPU, vRAM, vDRIVE, and vSW. NFVI VNFs/CNFs 905 comprise AMF 921, SMF 922, UPF 923, SMSF 924, UDM 925, MME 931, S-GW 932, P-GW 933, HSS 934, and SMSC 941. Additional VNFs and network elements like AUSF, PCF, NSSF, NEF, NRF, and AF are typically present but are omitted for clarity. NFVI 900 may be located at a single site or be distributed across multiple geographic locations. The NIC in NFVI hardware 901 is coupled to 5G gNodeB 511, LTE eNodeB 512, and data network (DN) 551. NFVI hardware 901 executes NFVI hardware drivers 902, NFVI operating systems 903, NFVI virtual layer 904, and NFVI VNFs/CNFs 905 to form AMF 521, SMF 522, UPF 523, SMSF 524, UDM 525, MME 531, S-GW 532, P-GW 533, HSS 534, and SMSC 541.

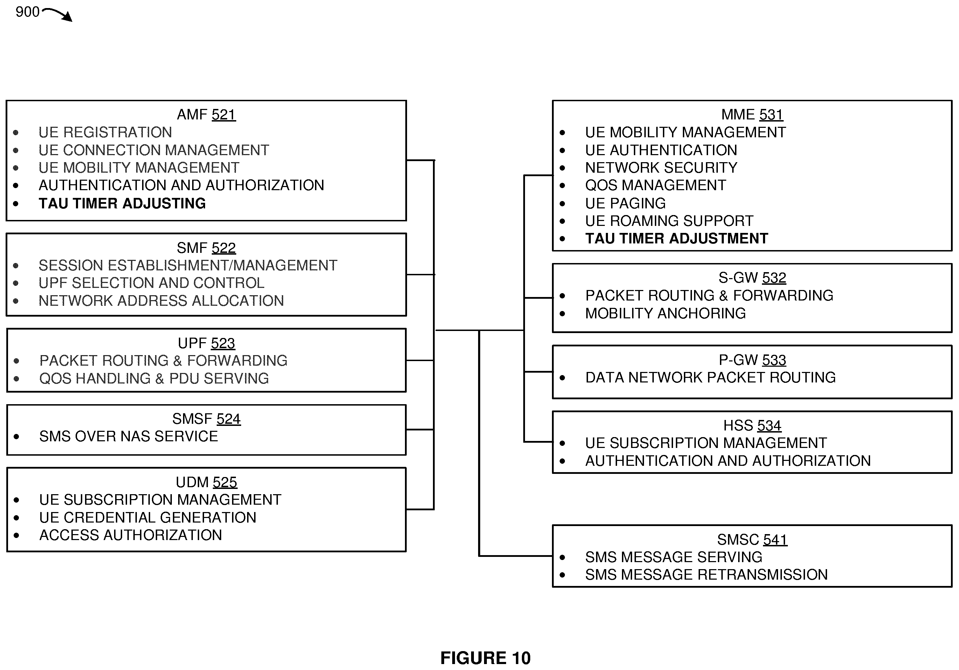

Figure 10 further illustrates NFVI 900 in 5G/LTE communication network 500. AMF 521 comprises capabilities for UE registration, UE connection management, UE mobility management, authentication, authorization, and TAU time adjusting. SMF 522 comprises capabilities for session establishment, session management, UPF selection, UPF control, and network address allocation. UPF 523 comprises capabilities for packet routing, packet forwarding, QoS handling, and PDU serving. SMSF 524 comprises capabilities for SMS over NAS service. UDM 525 comprises capabilities for UE subscription management, UE credential generation, and UE access authorization. MME 531 comprises capabilities for UE mobility management, UE authentication, network security, QoS management, UE paging, UE roaming support, and TAU timer adjustment. S-GW 532 comprises capabilities for packet routing, pack forwarding, and mobility anchoring. S-GW 533 comprises capabilities for data network packet routing. HSS 534 comprises capabilities for UE subscription management, authentication, and authorization. SMSC 541 comprises capabilities for SMS message serving and SMS message retransmission.

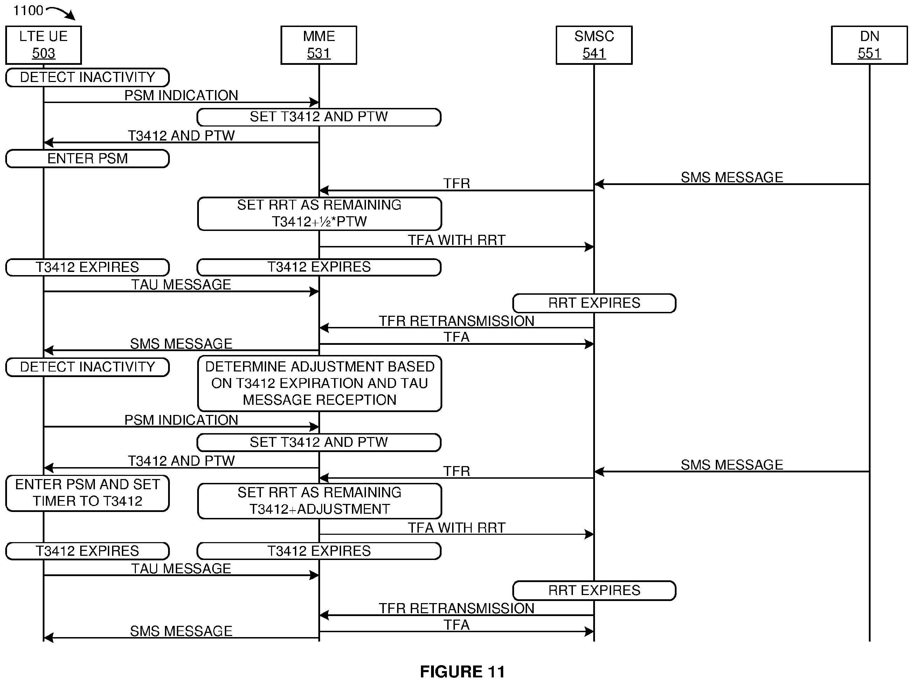

Figure 11 illustrates process 1100. Process 1100 comprises an exemplary operation of 5G/LTE communication network 500 to adjust retransmission times for message delivery to user devices when in power saving mode. Process 1100 comprises an example of processes 200, 300, and 400 illustrated in Figures 2-4, however processes 200, 300, and 400 may differ. Process 1100 may vary in other examples. In some examples, the RRC in LTE detects a threshold level of user inactivity and decides to enter power saving mode. The RRC in UE 503 transfers a UE idle message to the RRC in eNodeB 512 over the lower layer radio applications in UE 503 and eNodeB 512 (e.g., PDCP, RLC, MAC, and PHY). The RRC in eNodeB 512 forwards the UE idle message to MME 531. MME 531 sets a T3412 timer and PTW for UE 503. MME 531 forwards T3412 and PTW values to the RRC in eNodeB 512 which forwards the values to the RRC in UE 503 over the lower layer radio applications. The RRC in UE 503 and MME 531 set T3412 timers and LTE UE 503 enters power saving mode. Data network 551 receives an SMS message intended for UE 503 and forwards the message to SMSC 541. SMSC 541 determines UE 503 is registered with MME 531 and transfers a TFR that comprises the SMS message to MME 531. MME 531 determines the T3412 timer is active and in response, sums the remaining T3412 time and half of the PTW to select a Requested Retransmission Time (RRT). MME 531 transfers a TFA that includes the RRT to SMSC 541. SMSC 541 sets a retransmission timer based on the RRT.

The RRC in LTE UE 503 and MME 531 detect the expiration of the T3412. The RRC controls the lower layer radio applications to exit power saving mode and enter the PTW. The RRC in UE 503 transfers a TAU message to the RRC in eNodeB 512 over the lower layer radio applications in UE 503 and eNodeB 512. The RRC in eNodeB 512 forwards the TAU message to MME 531. MME 531 measures the amount of time between expiration of the T3412 and reception of the TAU message to determine an adjustment time. While the PTW for UE 503 is active, the retransmission timer in SMSC 541 expires and SMSC 541 retransmits the TFR with the SMS message to MME 531. MME 531 forwards the SMS message to the RRC in eNodeB 512. The RRC in eNodeB 512 delivers the SMS message to the RRC in UE 503 over the lower layer radio applications. MME 531 transfers a TFA to SMSC 541 over SMSF 524 to confirm message delivery.

When the PTW ends and user activity has not resumed, the RRC in UE 503 decides to reenter power saving mode. The RRC in UE 503 transfers a UE idle message to the RRC in eNodeB 512 over the lower layer radio applications. The RRC in eNodeB 512 delivers the UE idle message to MME 531. MME 531 responds by indicating the T3412 and PTW values to the RRC in eNodeB 512. The RRC in eNodeB 512 delivers the values to the RRC in UE 503 over the lower layer radio applications. The RRC in UE 503 and MME 531 set T3412 timers. The RRC in UE 503 controls its lower layer radio applications to reenter power saving mode.

Data network 551 receives another SMS message intended for UE 503. Network 551 forwards the SMS message to SMSC 541 which transfers a TFR that comprises the SMS message to MME 531. MME 531 identifies that the T3412 timer for UE 503 is active and in response, selects a learned RRT by summing the remaining time on the T3412 and the retransmission time adjustment. MME 531 transfers a TFA that includes the learned RRT to SMSC 541. SMSC 541 sets a retransmission timer based on the learned RRT. The RRC in LTE UE 503 and MME 531 detect the expiration of the T3412. The RRC in UE 503 controls the lower layer radio applications in UE 503 to exit power saving mode and enter the PTW. The RRC in UE 503 transfers a TAU message to the RRC in eNodeB 512 over the lower layer radio applications. The RRC in eNodeB 512 forwards the UE idle message to MME 531. While the PTW for UE 503 is active, the retransmission timer in SMSC 541 expires and SMSC 541 retransmits the TFR with the SMS message to MME 531. MME 531 forwards the SMS message to the RRC in eNodeB 512. The RRC in eNodeB 512 delivers the SMS message to the RRC in UE 503 over the lower layer radio applications. MME 531 transfers a TFA to SMSC 541 to confirm message delivery.

In 5G implementations, AMF 521 and the 5G radio applications in UE 501, UE 502, and gNodeB 511 operate to calculate retransmission times and deliver SMS messages in a manner similar to MME 531 and the LTE radio applications in UE 503 and eNodeB 512 as described above with respect to Figure 11. In LTE implementations, MME 531 and the LTE radio applications in UE 502 and eNodeB 512 may operate to calculate retransmission times and deliver SMS messages as described above for LTE UE 503, eNodeB 512, and MME 531 with respect to Figure 11.

The wireless data network circuitry described above comprises computer hardware and software that form special-purpose network circuitry to adjust retransmission times for message delivery to user devices when in power saving mode. The computer hardware comprises processing circuitry like CPUs, DSPs, GPUs, transceivers, bus circuitry, and memory. To form these computer hardware structures, semiconductors like silicon or germanium are positively and negatively doped to form transistors. The doping comprises ions like boron or phosphorus that are embedded within the semiconductor material. The transistors and other electronic structures like capacitors and resistors are arranged and metallically connected within the semiconductor to form devices like logic circuitry and storage registers. The logic circuitry and storage registers are arranged to form larger structures like control units, logic units, and Random-Access Memory (RAM). In turn, the control units, logic units, and RAM are metallically connected to form CPUs, DSPs, GPUs, transceivers, bus circuitry, and memory.

In the computer hardware, the control units drive data between the RAM and the logic units, and the logic units operate on the data. The control units also drive interactions with external memory like flash drives, disk drives, and the like. The computer hardware executes machine-level software to control and move data by driving machine-level inputs like voltages and currents to the control units, logic units, and RAM. The machine-level software is typically compiled from higher-level software programs. The higher-level software programs comprise operating systems, utilities, user applications, and the like. Both the higher-level software programs and their compiled machine-level software are stored in memory and retrieved for compilation and execution. On power-up, the computer hardware automatically executes physically-embedded machine-level software that drives the compilation and execution of the other computer software components which then assert control. Due to this automated execution, the presence of the higher-level software in memory physically changes the structure of the computer hardware machines into special-purpose network circuitry to adjust retransmission times for message delivery to user devices when in power saving mode.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. Thus, the invention is not limited to the specific embodiments described above, but only by the following claims and their equivalents.

## Claims

1. A method comprising:

   by a network control plane in a wireless communication network:

   receiving a power saving mode entry message from a wireless user device;
   indicating a current power saving mode timer to the wireless user device;
   determining an adjustment time based on an amount of time elapsed between an initial power saving mode timer and a power saving mode exit message associated with the wireless user device;
   receiving a message forwarding request for the wireless user device from a messaging server before the current power saving mode update timer expired;
   determining a retransmission time based on an amount of time remaining on the current power saving mode timer and the adjustment time; and
   directing the messaging server to retransmit the message forwarding request at the retransmission time.

2. The method of claim 1 further comprising:

   receiving an initial power saving mode entry message from the wireless user device;
   indicating the initial power saving mode timer and an initial transmission time window to the wireless user device;
   receiving an initial message forwarding request for the wireless user device from the messaging server before the initial power saving mode timer has expired;

selecting an initial retransmission time based on an amount of time remaining on the initial power saving mode timer and the transmission time window; and

directing the messaging server to retransmit the initial message forwarding request at the initial retransmission time.

3. The method of claim 2 further comprising:

receiving the power saving mode exit message; during the initial transmission time window, receiving the initial message forwarding request retransmitted by the messaging server at the initial retransmission time; forwarding an initial text message included in the initial message forwarding request for delivery to the wireless user device; and wherein: receiving the power saving mode entry message from the wireless user device comprises receiving the power saving mode entry message from the wireless user device subsequent to the end of the initial transmission time window.

4. The method of claim 3 wherein:

indicating the current power saving mode timer to the wireless user device comprises indicating the current power saving mode timer and a current transmission time window to the wireless user device; and determining the adjustment time based on the amount of time elapsed between the initial power saving mode timer and the power saving mode exit message comprises determining the adjustment time based on the amount of time elapsed between expiration of the initial power saving mode timer and reception of the power saving mode exit message.

5. The method of claim 4 further comprising:

receiving a current power saving mode exit message; during the current transmission time window, receiving the message forwarding request retransmitted by the messaging server at the retransmission time; and forwarding a text message included in the message forwarding request for delivery to the wireless user device.

6. The method of claim 1 wherein:

the power saving mode entry message comprises a User Equipment (UE) idle mode indication; the current power saving mode timer comprises a Tracking Area Update (TAU) timer; the initial power saving mode timer comprises an initial TAU timer; the power saving mode exit message comprises a TAU message; the message forwarding request comprises a Mobile Terminated Forward Short Message Request (TFR); and directing the messaging server to retransmit the message forwarding request at the retransmission time comprises transferring a Requested Retransmission Time (RRT) message that indicates retransmission time to the messaging server.

7. The method of claim 1 wherein:

the network control plane comprises one or more of a Mobility Management Entity (MME) or an Access and Mobility Management Function (AMF); the messaging server comprises a Short-Message-Service Center (SMSC); and the wireless user device comprises at least one of a Long Term Evolution (LTE) User Equipment (UE), a Fifth Generation New Radio (5GNR) UE, or an LTE/5GNR UE.

8. A wireless communication network comprising: control plane circuitry to:

receive a power saving mode entry message from a wireless user device; indicate a current power saving mode timer to the wireless user device; determine an adjustment time based on an amount of time elapsed between an initial power saving mode timer and a power saving mode exit message associated with the wireless user device; receive a message forwarding request for the wireless user device from a messaging server before the current power saving mode timer has expired; determine a retransmission time based on an amount of time remaining on the current power saving mode timer and the adjustment time; and direct the messaging server to retransmit the message forwarding request at the retransmission time.

9. The wireless communication network of claim 8 wherein the control plane circuitry is to further:

receive an initial power saving mode entry message from the wireless user device; indicate the initial power saving mode timer and an initial transmission time window to the wireless user device;

receive an initial message forwarding request for the wireless user device from the messaging server before the initial power saving mode timer has expired;

select an initial retransmission time based on an amount of time remaining on the initial power saving mode timer and the transmission time window; and

direct the messaging server to retransmit the initial message forwarding request at the initial retransmission time.

10. The wireless communication network of claim 9 wherein the control plane circuitry is to further:

receive the power saving mode exit message;

during the initial transmission time window, receive the initial message forwarding request retransmitted by the messaging server at the initial retransmission time;

forward an initial text message included in the initial message forwarding request for delivery to the wireless user device; and wherein the control plane circuitry is to:

receive the power saving mode entry message from the wireless user device subsequent to the end of the initial transmission time window.

11. The wireless communication network of claim 10 wherein the control plane circuitry is to:

indicate the current power saving mode timer and a current transmission time window to the wireless user device; and

determine the adjustment time based on the amount of time elapsed between expiration of the initial power saving mode timer and reception of the power saving mode exit message.

12. The wireless communication network of claim 11 wherein the control plane circuitry is to further:

receive a current power saving mode exit message;

during the current transmission time window, receive the message forwarding request retransmitted by the messaging server at the retransmission time; and

forward a text message included in the message forwarding request for delivery to the wireless user device.

13. The wireless communication network of claim 8 wherein:

the power saving mode entry message comprises a User Equipment (UE) idle mode indication;

the current power saving mode timer comprises a Tracking Area Update (TAU) timer;

the initial power saving mode timer comprises an initial TAU timer;

the power saving mode exit message comprises a TAU message;

the message forwarding request comprises a Mobile Terminated Forward Short Message Request (TFR); and

directing the messaging server to retransmit the message forwarding request at the retransmission time comprises transferring a Requested Retransmission Time (RRT) message that indicates retransmission time to the messaging server.

14. The wireless communication network of claim 8 wherein:

the network control plane comprises one or more of a Mobility Management Entity (MME) or an Access and Mobility Management Function (AMF);

the messaging server comprises a Short-Message-Service Center (SMSC); and

the wireless user device comprises at least one of a Long Term Evolution (LTE) User Equipment (UE), a Fifth Generation New Radio (5GNR) UE, or an LTE/5GNR UE.

15. One of more non-transitory computer readable storage media having program instructions stored thereon, wherein the program instruction, when executed by a computing system, direct the computing system to perform operations, the operations comprising:

measuring an amount of time elapsed between an expiration of a Tracking Area Update (TAU) timer and reception of a TAU message transmitted by a wireless user device to determine an adjustment time, wherein the TAU timer indicates when the wireless user device is in power saving mode;

during a Paging Time Window (PTW) for the wireless user device, receiving a Mobile Terminated Short Message Forwarding Request (TFR) retransmitted by a Short-Message-Service Center (SMSC);

transferring a Short-Message-Service (SMS) message included in the TFR for delivery to the wireless user device;

after expiration of the PTW, receiving an idle mode indication from the wireless user device;

indicating a second TAU timer and a second PTW to the wireless user device;

receiving a second TFR for the wireless user device from the messaging server before the second TAU timer has expired;

selecting a Requested Retransmission Time (RRT) by summing an amount of time remaining on the second TAU timer and the adjustment time;

transferring a Mobile Terminated Short Message Forwarding Answer (TFA) to the SMSC that directs the SMSC to retransmit the second TFR at the RRT;

during the second PTW, receiving the second TFR retransmitted by the SMSC at the RRT; and transferring a second SMS message included in the second TFR for delivery to the wireless user device.

**FIGURE 1**

200 ⟶

| | |
|---|---|
| RECEIVING A POWER SAVING MODE ENTRY MESSAGE FROM A WIRELESS USER DEVICE. | 201 |
| INDICATING A CURRENT POWER SAVING MODE TIMER TO THE WIRELESS USER DEVICE. | 202 |
| DETERMINING AN ADJUSTMENT TIME BASED ON AN AMOUNT OF TIME ELAPSED BETWEEN AN INITIAL POWER SAVING MODE TIMER AND A POWER SAVING MODE EXIT MESSAGE ASSOCIATED WITH THE WIRELESS USER DEVICE. | 203 |
| RECEIVING A MESSAGE FORWARDING REQUEST FOR THE WIRELESS USER DEVICE FROM A MESSAGING SERVER BEFORE THE CURRENT POWER SAVING MODE TIMER EXPIRED. | 204 |
| DETERMINING A RETRANSMISSION TIME BASED ON AN AMOUNT OF TIME REMAINING ON THE CURRENT POWER SAVING MODE TIMER AND THE ADJUSTMENT TIME. | 205 |
| DIRECTING THE MESSAGING SERVER TO RETRANSMIT THE MESSAGE FORWARDING REQUEST AT THE RETRANSMISSION TIME. | 206 |

**FIGURE 2**

EP 4 661 513 A1

300 ⟶

MEASURING AN AMOUNT OF TIME ELAPSED BETWEEN AN EXPIRATION OF A TRACKING AREA UPDATE (TAU) TIMER AND RECEPTION OF A TAU MESSAGE TRANSMITTED BY A WIRELESS USER DEVICE TO DETERMINE AN ADJUSTMENT TIME. ⟶ 301

DURING A PAGING TIME WINDOW (PTW) FOR THE WIRELESS USER DEVICE, RECEIVING A MOBILE TERMINATED SHORT MESSAGE FORWARDING REQUEST (TFR) RETRANSMITTED BY A SHORT-MESSAGE-SERVICE CENTER (SMSC) AND TRANSFERRING A SHORT-MESSAGE-SERVICE (SMS) MESSAGE INCLUDED IN THE TFR FOR DELIVERY TO THE WIRELESS USER DEVICE. ⟶ 302

AFTER EXPIRATION OF THE PTW, RECEIVING AN IDLE MODE INDICATION FROM THE WIRELESS USER DEVICE AND INDICATING A SECOND TAU TIMER AND A SECOND PTW TO THE WIRELESS USER DEVICE. ⟶ 303

RECEIVING A SECOND TFR FOR THE WIRELESS USER DEVICE FROM THE MESSAGING SERVER BEFORE THE SECOND TAU TIMER HAS EXPIRED. ⟶ 304

SELECTING A REQUESTED RETRANSMISSION TIME (RRT) BY SUMMING AN AMOUNT OF TIME REMAINING ON THE SECOND TAU TIMER AND THE ADJUSTMENT TIME AND TRANSFERRING A MOBILE TERMINATED SHORT MESSAGE FORWARDING ANSWER (TFA) TO THE SMSC THAT DIRECTS THE SMSC TO RETRANSMIT THE SECOND TFR AT THE RRT. ⟶ 305

DURING THE SECOND PTW, RECEIVING THE SECOND TFR RETRANSMITTED BY THE SMSC AT THE RRT. ⟶ 306

TRANSFERRING A SECOND SMS MESSAGE INCLUDED IN THE SECOND TFR FOR DELIVERY TO THE WIRELESS USER DEVICE. ⟶ 307

**FIGURE 3**

FIGURE 4

**FIGURE 5**

**FIGURE 6**

EP 4 661 513 A1

500

## 5G G-NODE-B 511

### 5G RADIO UNIT (RU) 711

ANTENNAS — AMPS & FILTERS — MODULATION — ANALOG/ DIGITAL — DSP — MEMORY — XCVR

5G UE 501

5G/LTE UE 502

FRONT HAUL

MID HAUL

### 5G DISTRIBUTED UNIT (DU) 712

MEMORY

OS | MAC
RLC | PHY

CPU

XCVR

XCVR

### 5G CENTRALIZED UNIT (CU) 713

MEMORY

OS | RRC
SDAP | PDCP

CPU

XCVR

XCVR

BACK HAUL

DATA NETWORK 551

NETWORK CORE 520

EP 4 661 513 A1

24

FIGURE 7

500

LTE E-NODE-B 512

5G/LTE UE 502

LTE UE 503

LTE RADIO UNIT (RU) 811

ANTENNAS — AMPS & FILTERS — MODULATION — ANALOG/ DIGITAL — DSP — MEMORY — XCVR

FRONT HAUL

LTE BASEBAND UNIT (BBU) 812

MEMORY
OS    RRC
PDCP    RLC
MAC    PHY

CPU

XCVR

XCVR

BACK HAUL

DATA NETWORK 551

NETWORK CORE 520

EP 4 661 513 A1

FIGURE 8

500 ⤵

| NETWORK VIRTUAL FUNCTION INFRASTRUCTURE (NFVI) 900 |
| --- |

**VNFs/CNFs 905**

AMF 921  SMF 922  UPF 923  SMSF 924  UDM 925

MME 931  S-GW 932  P-GW 933  HSS 934  SMSC 941

**NFVI VIRTUAL LAYER 904**

vNIC  vCPU  vGPU  vRAM  vDRIVE  vSW

**NFVI OPERATING SYSTEMS 903**

KERNAL  MODULE  APPLICATION

CONTAINER  HYPERVISOR

**NFVI HARDWARE DRIVERS 902**

NIC  CPU  GPU  RAM  DRIVE  SW

**NFVI HARDWARE 901**

NIC  CPU  GPU  RAM  DRIVE  SW

UE 501
UE 502
UE 503

5G NODE 511
LTE NODE 512

DN 551

**FIGURE 9**

900

**AMF 521**
- UE REGISTRATION
- UE CONNECTION MANAGEMENT
- UE MOBILITY MANAGEMENT
- AUTHENTICATION AND AUTHORIZATION
- **TAU TIMER ADJUSTING**

**SMF 522**
- SESSION ESTABLISHMENT/MANAGEMENT
- UPF SELECTION AND CONTROL
- NETWORK ADDRESS ALLOCATION

**UPF 523**
- PACKET ROUTING & FORWARDING
- QOS HANDLING & PDU SERVING

**SMSF 524**
- SMS OVER NAS SERVICE

**UDM 525**
- UE SUBSCRIPTION MANAGEMENT
- UE CREDENTIAL GENERATION
- ACCESS AUTHORIZATION

**MME 531**
- UE MOBILITY MANAGEMENT
- UE AUTHENTICATION
- NETWORK SECURITY
- QOS MANAGEMENT
- UE PAGING
- UE ROAMING SUPPORT
- **TAU TIMER ADJUSTMENT**

**S-GW 532**
- PACKET ROUTING & FORWARDING
- MOBILITY ANCHORING

**P-GW 533**
- DATA NETWORK PACKET ROUTING

**HSS 534**
- UE SUBSCRIPTION MANAGEMENT
- AUTHENTICATION AND AUTHORIZATION

**SMSC 541**
- SMS MESSAGE SERVING
- SMS MESSAGE RETRANSMISSION

EP 4 661 513 A1

**FIGURE 10**

FIGURE 11

Europäisches
Patentamt

European
Patent Office

Office européen
des brevets

# EUROPEAN SEARCH REPORT

**Application Number**

**EP 25 17 9123**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Americas Headquarters: "Ultra IoT C-SGN Guide, StarOS Release 21.3 THE SPECIFICATIONS AND INFORMATION REGARDING THE PRODUCTS IN THIS MANUAL ARE SUBJECT TO CHANGE WITHOUT NOTICE. ALL STATEMENTS, INFORMATION, AND RECOMMENDATIONS IN THIS MANUAL ARE BELIEVED TO BE ACCURATE BUT ARE PRESENTED WITHOUT WARRANTY OF ANY KIND, EXPRES", , 5 September 2017 (2017-09-05), XP055743983, Retrieved from the Internet: URL:https://www.cisco.com/c/en/us/td/docs/wireless/asr_5000/21-3_N5-5/Ultra_IoT_CSGN/21-3-Ultra-IoT-CSGN-Guide.pdf [retrieved on 2020-10-26] * In Chapter 6: T3324, T3412; pages 13,62-64 * | 1-15 | INV. H04W52/02 H04W76/27 |
| A | US 2017/339639 A1 (STOJANOVSKI ALEXANDRE [FR] ET AL) 23 November 2017 (2017-11-23) * paragraphs [0028], [0029], [0032] - [0035], [0046] - [0048]; figure 3 * | 1-15 | TECHNICAL FIELDS SEARCHED (IPC) H04W |

The present search report has been drawn up for all claims

| Place of search | Date of completion of the search | Examiner |
|---|---|---|
| The Hague | 23 September 2025 | Amorotti, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 17 9123

This annex lists the patent family members relating to the patent documents cited in  the above-mentioned European search report.
The members are as contained in the European Patent Office EDP file on
The European Patent Office is in no way liable for these particulars which are merely given for the purpose of information.

23-09-2025

| Patent document cited in search report | Publication date | Patent family member(s) | | Publication date |
|---|---|---|---|---|
| US 2017339639 A1 | 23-11-2017 | BR | 112017012049 A2 | 26-12-2017 |
| | | CN | 107431981 A | 01-12-2017 |
| | | EP | 3245819 A1 | 22-11-2017 |
| | | JP | 2018501720 A | 18-01-2018 |
| | | KR | 20170103766 A | 13-09-2017 |
| | | US | 2016205625 A1 | 14-07-2016 |
| | | US | 2017339639 A1 | 23-11-2017 |
| | | WO | 2016114827 A1 | 21-07-2016 |

EPO FORM P0459

For more details about this annex : see Official Journal of the European Patent Office, No. 12/82